# EUROPÄISCHE PATENTSCHRIFT

(11) **EP 3 298 680 B1**
(45) Veröffentlichungstag und Bekanntmachung des Hinweises auf die Patenterteilung: **15.05.2024**
(21) Anmeldenummer: 16723712.2
(22) Anmeldetag: 11.05.2016
(51) Int. Cl.: H02K 5/20, H02K 11/33, H02K 9/14, H02K 9/22

(54) **MOTOR MIT STEUEREINRICHTUNG UND KÜHLKÖRPER**
MOTOR WITH CONTROL DEVICE AND HEAT SINK
MOTEUR COMPRENANT UN DISPOSITIF DE COMMANDE ET UN DISSIPATEUR THERMIQUE

(30) Priorität: 22.05.2015 DE 102015209543
(43) Veröffentlichungstag der Anmeldung: 28.03.2018
(73) Patentinhaber: Lenze Drives GmbH, 32699 Extertal (DE)
(72) Erfinder: WETTLAUFER, Jan, 31789 Hameln (DE); HÜBNER, Karsten, 31855 Aerzen (DE)
(74) Vertreter: Patentanwälte Ruff, Wilhelm, Beier, Dauster & Partner mbB
(86) Internationale Anmeldenummer: PCT/EP2016/060600
(87) Internationale Veröffentlichungsnummer: WO 2016/188756

(56) Entgegenhaltungen:
- WO-A1-95/06971
- DE-A1-102012 218 444
- FR-A1- 2 911 444

## Beschreibung

Die Erfindung betrifft ein Motorsystem.

Die WO 95/06971 A1 zeigt ein Motorsystem mit einem Stator, einem Rotor, einer Anzahl von Leistungsmodulen, die jeweils ebene Kontaktflächen zur Wärmeableitung aufweisen, einer Steuereinrichtung, die dazu ausgebildet ist, die Leistungsmodule anzusteuern, einem Gehäuse, wobei der Stator und der Rotor innerhalb des Gehäuses angeordnet sind, und einem Kühlkörper. Der Kühlkörper weist eine Anzahl von ebenen Kontaktflächen auf, die wärmeleitend mit jeweils korrespondierenden Kontaktflächen der Leistungsmodule verbunden sind. Der Kühlkörper weist Bereiche zur Wärmeableitung auf, wobei die Bereiche zur Wärmeableitung von einem Kühlmedium umströmt sind. Der Stator und der Rotor sind in einem ersten axialen Abschnitt des Gehäuses angeordnet. Der Kühlkörper ist in einem zweiten, vom ersten axialen Abschnitt verschiedenen axialen Abschnitt innerhalb des Gehäuses eingesetzt. Das Gehäuse weist einen ersten, zentralen Kanal auf, wobei der Stator und der Rotor innerhalb des ersten Kanals angeordnet sind, und eine Anzahl von zweiten Kanälen auf, wobei die zweiten Kanäle den ersten Kanal radial umgeben und wobei die zweiten Kanäle geschlossene Kanäle zur Führung des Kühlmediums bilden.

Die DE 10 2012 218 444 A1 zeigt eine elektrische Antriebsanordnung sowie eine Kühlvorrichtung für eine elektrische Antriebsanordnung mit einem Gehäuse, das einen ersten, zentralen Kanal aufweist und das eine Anzahl von zweiten Kanälen aufweist, wobei die zweiten Kanäle den ersten Kanal radial umgeben und wobei die zweiten Kanäle geschlossene Kanäle zur Führung eines Kühlmediums bilden.

Die FR 2 911 444 A1 zeigt eine elektrische Maschine, bei der Leistungshalbleiter auf korrespondierenden Kühlkörpern angeordnet sind.

Der Erfindung liegt die Aufgabe zugrunde, ein Motorsystem mit im Vergleich zum Stand der Technik optimierten thermischen Eigenschaften zur Verfügung zu stellen.

Die Erfindung löst diese Aufgabe durch ein Motorsystem nach Anspruch 1.

Das Motorsystem weist zunächst einen Stator, einen Rotor und typisch auch eine Motorwelle auf. Die Motorwelle ist mit dem Rotor drehfest mechanisch gekoppelt. Die Motorwelle definiert eine radiale Richtung und eine axiale Richtung des Motorsystems. Die axiale Richtung ist diejenige Richtung, in der sich die Drehachse der Motorwelle erstreckt, die radiale Richtung ist die Richtung radial zur Drehachse der Motorwelle.

Der Stator kann herkömmlich zur Erzeugung eines magnetischen Drehfeldes dienen. Der Stator kann Statorpole aufweisen, die mit Einzelwicklungen versehen sind. Stator und Rotor werden in Kombination als Aktivteil bezeichnet.

Das Motorsystem weist weiter eine Anzahl, beispielsweise zwischen 2 und 20, von Leistungsmodulen auf, die jeweils ebene Kontaktflächen zur Wärmeableitung aufweisen. Die Leistungsmodule können beispielsweise IGBT-Module sein. Die Leistungsmodule können Leistungshalbleiter aufweisen, die in ihrem Betrieb Wärme erzeugen. Insoweit sei auch auf die einschlägige Fachliteratur verwiesen.

Das Motorsystem weist weiter eine Steuereinrichtung auf, beispielsweise in Form eines Mikrocontrollers, eines DSPs, oder eines FPGAs. Die Steuereinrichtung ist dazu ausgebildet, die Leistungsmodule anzusteuern, beispielsweise derart anzusteuern, dass geeignete Ansteuerspannungen und/oder geeignete Ansteuerströme für eine oder mehrere Wicklungen des Stators und/oder eine oder mehrere Wicklungen des Rotors erzeugt werden. Die Steuereinrichtung kann in Verbindung mit den Leistungsmodulen (und weiteren Komponenten) die Funktion eines Frequenzumrichters bereitstellen.

Das Motorsystem weist weiter ein Gehäuse auf, wobei der Stator und der Rotor innerhalb des Gehäuses angeordnet sind.

Das Motorsystem weist weiter mindestens einen Kühlkörper auf. Der Kühlkörper weist eine Anzahl von ebenen, insbesondere rechteckförmigen, Kontaktflächen auf, die wärmeleitend mit jeweils korrespondierenden Kontaktflächen der Leistungsmodule, insbesondere unmittelbar, verbunden sind. Die Anzahl der Kontaktflächen ist insbesondere identisch mit der Anzahl der Leistungsmodule. Der Kühlkörper weist Bereiche zur Wärmeableitung an ein Kühlmedium, beispielsweise Luft, auf, wobei die Bereiche zur Wärmeableitung von dem Kühlmedium umströmt sind. Das Kühlmedium durchströmt das Gehäuse bevorzugt in axialer Richtung.

Auch der Verbund aus Leistungsmodulen und Kühlkörper sowie die Steuereinrichtung können innerhalb des Gehäuses angeordnet sein.

Der mindestens eine Kühlkörper kann getrennt von dem Gehäuse ausgebildet (vorgesehen, hergestellt) sein, wobei der Kühlkörper mit dem Gehäuse mechanisch gekoppelt, beispielsweise verschraubt, sein kann. Der Kühlkörper bildet somit einen Inlay-Kühlkörper. Das Motorsystem kann weiter stirnseitige Abschlusstücke, beispielsweise in Form eines A-Lagerschilds und eines B-Lagerschilds, aufweisen. Für diesen Fall kann der mindestens eine Kühlkörper getrennt von dem Gehäuse ausgebildet (vorgesehen, hergestellt) sein, wobei der Kühlkörper dann mit einem der Abschlussstücke, beispielsweise dem A-Lagerschild oder dem B-Lagerschild, mechanisch gekoppelt, beispielsweise verschraubt, sein kann und in dieses eingesetzt sein kann.

Der Stator und der Rotor sind in einem ersten axialen Abschnitt des Gehäuses angeordnet und der mindestens eine Kühlkörper ist in einem zweiten, vom ersten axialen Abschnitt verschiedenen axialen Abschnitt innerhalb des Gehäuses angeordnet bzw. eingesetzt, indem der Kühlkörper beispielsweise von einer Seite des Gehäuses in das Gehäuse eingeschoben und anschließend mit diesem verschraubt wird.

Das Motorsystem weist weiter ein thermisch isolierendes (schlecht wärmeleitendes) Zwischenstück auf, wobei das Zwischenstück in axialer Richtung zwischen dem ersten axialen Abschnitt und dem zweiten axialen Abschnitt angeordnet ist. Das Zwischenstück kann beispielsweise aus Kunststoff bestehen. Das Zwischenstück vermittelt zwischen den beiden axialen Abschnitten. Beispielsweise stellt das Zwischenstück einen stetigen (stufenlosen) Übergang für das in axialer Richtung strömende Kühlmedium bereit. Das Zwischenstück kann weiter abdichtende Funktionsbereiche gegenüber den angrenzenden axialen Bereichen aufweisen, beispielswiese in Form einer Ringnut zur Aufnahme einer Elastomerdichtung.

Der Kühlkörper kann ringförmig ausgebildet sein, wobei die Kontaktflächen des Kühlkörpers auf einer Innenseite des Rings angeordnet sind und die Wärmeableitbereiche des Kühlkörpers als oberflächenvergrößernd strukturierte Bereiche, insbesondere als sich axial erstreckend Kühlfinnen oder Kühlrippen, auf einer Außenseite des Rings angeordnet sind.

Der Kühlkörper kann aus einer Anzahl (beispielsweise zwei) von Ringsegmenten gebildet sein. Die Ringsegmente können beispielsweise als Halbschalen gebildet sein.

Das Gehäuse weist einen ersten, zentralen (inneren), sich axial erstreckenden Kanal auf, wobei der Stator und der Rotor innerhalb des ersten Kanals angeordnet sind. Der erste Kanal kann ein (kreis-) zylindrischer Kanal sein. Der erste Kanal kann axial in eine Anzahl von Teilkanälen segmentiert sein, die beispielsweise mittels thermischer Sperrschichten voneinander thermisch isoliert sein können. Das Gehäuse weist weiter eine Anzahl (beispielsweise vier) von zweiten, insbesondere zylindrischen, sich axial erstreckenden Kanälen auf, wobei die zweiten Kanäle den ersten Kanal, teilweise oder vollständig, radial außen umgeben und wobei die zweiten Kanäle geschlossene Kanäle zur, insbesondere axialen, Führung des Kühlmediums bilden. Mit anderen Worten umgeben die zweiten Kanäle den ersten Kanal außenseitig. Die zweiten Kanäle sind, insbesondere wärmeleitend, mit der Außenwand des ersten Kanals verbunden, beispielsweise indem der erste Kanal und die zweiten Kanäle teilweise gemeinsame Wandabschnitte aufweisen. Die zweiten Kanäle bilden geschlossene axial verlaufende Kanäle zur Führung des Kühlmediums, insbesondere in Form von Kühlluft. In die Kanäle kann beispielsweise von außen, beispielsweise mittels eines Lüfters, Kühlluft eingeblasen werden.

Die zweiten Kanäle zur Führung des Kühlmediums können in den stirnseitigen Abschlussstücken, beispielsweise dem A-Lagerschild und/oder dem B-Lagerschild, weitergeführt werden oder beispielsweise bei Luftkühlung das Kühlmedium nach Außen führen und somit an die Umgebung abgeben. An der A-Seite oder an der B-Seite kann ein Lüfter vorgesehen sein, der Luft als Kühlmedium durch die zweiten Kanäle drückt oder aus diesen zieht, wobei auf der dem Lüfter gegenüberliegenden Seite die Luft wieder aus dem entsprechenden Abschlussstück austritt bzw. durch dieses eingesogen wird.

Der erste Kanal und die zweiten Kanäle erstrecken sich nur (ausschließlich) über den ersten axialen Abschnitt des Gehäuses. Hierzu kann das Gehäuse nachbearbeitet werden, so dass in dem zweiten axialen Abschnitt nur eine Gehäuseaußenwand bestehen bleibt, in die der Kühlkörper eingesteckt wird.

Das Gehäuse kann durch Bearbeiten, beispielsweise Fräsen, Sägen, usw., eines oder mehrerer Strangpressprofile hergestellt sein bzw. ein Strangpressprofil sein. Der Kühlkörper kann beispielsweise mittels Aluminiumspritzguss hergestellt werden.

Eine (radiale) Querschnittsfläche des Kühlkörpers kann in seiner Grundform ein regelmäßiges Polygon darstellen. Aufgrund des regelmäßigen Polygons bilden sich auf der Innenseite des Kühlkörpers die ebenen Kontaktflächen, auf die die korrespondierenden Kontaktflächen der Leistungsmodule einfach wärmeleitend kontaktierbar sind.

Erfindungsgemäß werden die Leistungsmodule, die eine (makroskopisch) ebene Kontaktflächen bzw. Anlagefläche für die Wärmeabfuhr aufweisen, thermisch optimiert in ein Gehäuse integriert, dessen übliche Ausgestaltung in seinem Inneren keine (makroskopisch) ebenen Oberflächen aufweist.

Hierzu kann beispielsweise eine Grundform des Gehäuses modifiziert werden. Beispielsweise kann das Gehäuse innen axial durchgängig polygonförmig ausgestaltet sein. Alternativ kann im Inneren des Gehäuses lediglich ein definierter axialer Abschnitt derart nachgearbeitet werden, dass dieser axiale Abschnitt polygonförmig ausgestaltet ist. Hierzu kann beispielsweise ein Polygon in das Gehäuseinnere eingefräst werden.

Weiter können Taschen mit (ebener) Anlagefläche für die Leistungsmodule in der Gehäuseinnenwand vorgesehen sein, wobei die Taschen die Gehäuseinnenwand nicht vollständig durchdringen, d.h. in Richtung der Gehäuseaußenwand geschlossen sind. Alternativ können durchgängige Taschen (Fenster) in der Gehäusewand in Kombination mit zusätzlichen durch die Taschen durchsteckbaren Kühlkörpern vorgesehen sein, wobei die Kühlkörper die ebenen Anlageflächen für die Leistungsmodule aufweisen. Diese Kühlkörper können Elemente zur Vergrößerung der vom Kühlmedium umströmten Fläche aufweisen, die aus der Grundform herausragen oder in Kanäle zur Kühlmedienführung des Gehäuses hineinragen, so dass sie nicht aus dem Gehäuse herausragen. Die Elemente können beispielsweise Kühlrippen oder Igelstrukturen sein.

Mittels der Erfindung können die Leistungsmodule gut thermisch (dabei ist das Leistungsmodul mit der schlechtesten Kopplung ausschlaggebend) an das Kühlmedium gekoppelt werden (Rth möglichst klein), d.h. schon eine kleine Temperaturdifferenz reicht aus, um alle Verlustwärme in das Kühlmedium abzuführen. Der Aktivteil mit Rotor und Stator der Maschine und die Leistungsmodule sind thermisch entkoppelt, d.h. das Vermögen zum Wärmetransport zwischen Aktivteil und den Leistungsmodulen wird eingeschränkt. Weiter ist eine ausreichend hohe Schutzklasse (IP 54 oder höher) darstellbar, welche einen Einsatz in industrieller Umgebung, Fahrzeugen o.ä. ermöglicht.

Die Erfindung wird nachfolgend unter Bezugnahme auf die Zeichnungen detailliert beschrieben. Hierbei zeigen:
- Fig. 1: ein erfindungsgemäßes Motorsystem in perspektivischer Darstellung,
- Fig. 2: ein Gehäuse des erfindungsgemäßes Motorsystems, in dem ein Rotor, ein Stator und eine Motorwelle angeordnet sind,
- Fig. 3: einen Kühlkörper und Leistungsmodule, die mit dem Kühlkörper wärmeleitend verbunden sind,
- Fig. 4: eine axiale Anordnung von Stator, einem Zwischenstück und dem Kühlkörper innerhalb des Gehäuses,
- Fig. 5: das leere Gehäuse in einer perspektivischen Vorderansicht und
- Fig. 6: das Gehäuse mit eingesetztem Kühlkörper.

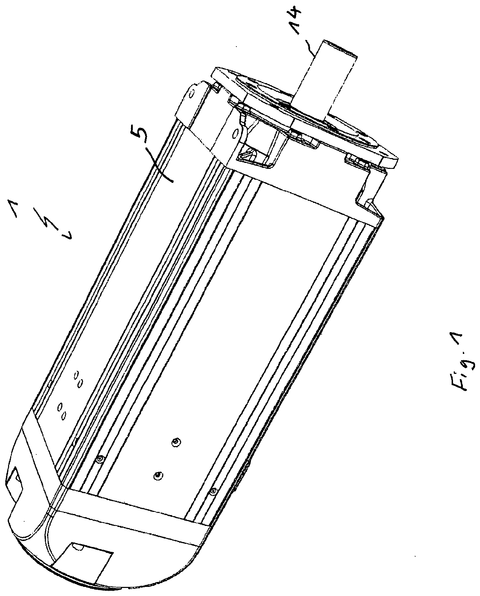

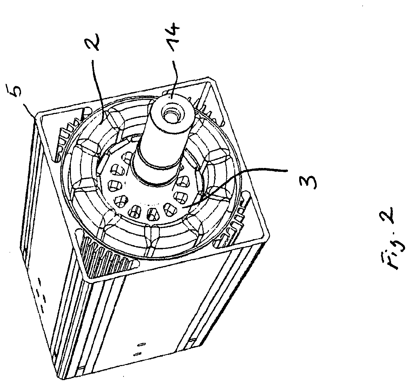

Fig. 1 zeigt ein erfindungsgemäßes Motorsystem 1 in perspektivischer Darstellung. Das Motorsystem 1 weist ein Gehäuse 5 auf, in dem ein Rotor 2 und ein Stator 3 angeordnet sind (siehe Fig. 2). Der Rotor 3 ist drehfest mit einer Motorwelle 14 verbunden. Die Motorwelle definiert eine radiale Richtung und eine axiale Richtung des Motorsystems 1. Die axiale Richtung ist diejenige Richtung, in der sich die Drehachse der Motorwelle 14 erstreckt, die radiale Richtung ist die Richtung radial zur Drehachse der Motorwelle 14.

Das Motorsystem 1 kann als eine PM-Synchronmaschine mit integrierter Leistungs- und Regelungselektronik ausgeführt sein.

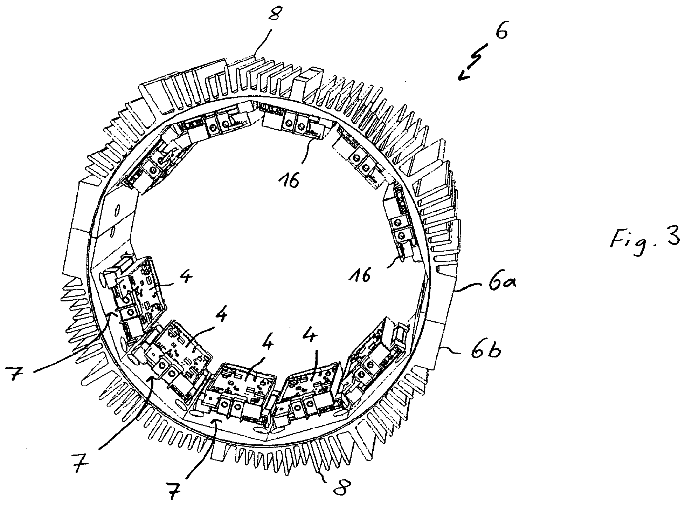

Bezugnehmend auf Fig. 3 weist das Motorsystem 1 zehn Leistungsmodule 4 auf, die jeweils herkömmlich ebene Kontaktflächen zur Wärmeableitung aufweisen. Insoweit sei auch auf die einschlägige Fachliteratur verwiesen.

Das Motorsystem 1 weist weiter einen ringförmigen Kühlkörper 6 aus, der aus zwei, insbesondere einstückigen, Halbschalen 6a und 6b besteht. Der Kühlkörper 6 weist eine Querschnittsfläche in Form eines regelmäßigen Polygons mit zehn ebenen Kontaktflächen 7 auf, die wärmeleitend mit jeweils korrespondierenden Kontaktflächen der Leistungsmodule 4 verbunden sind. Hierzu liegt Kontaktfläche unmittelbar auf Kontaktfläche, wobei gegebenenfalls auch eine Wärmeleitpaste zwischen sich berührenden Kontaktfläche aufgebracht sein kann. Die Leistungsmodule 4 können mittels nicht dargestellter Mittel auf die Kontaktflächen 7 gedrückt werden.

Der Kühlkörper 6 weist außenseitig Bereiche in Form von Kühlfinnen 8 zur Wärmeableitung auf, wobei die Kühlfinnen 8 zur Wärmeableitung von einem Kühlmedium in Form von Luft umströmt sind.

Das Motorsystem 1 weist weiter eine nicht dargestellte Steuereinrichtung auf, die dazu ausgebildet ist, die Leistungsmodule 4 anzusteuern und den Betrieb des Motorsystems 1 zu kontrollieren.

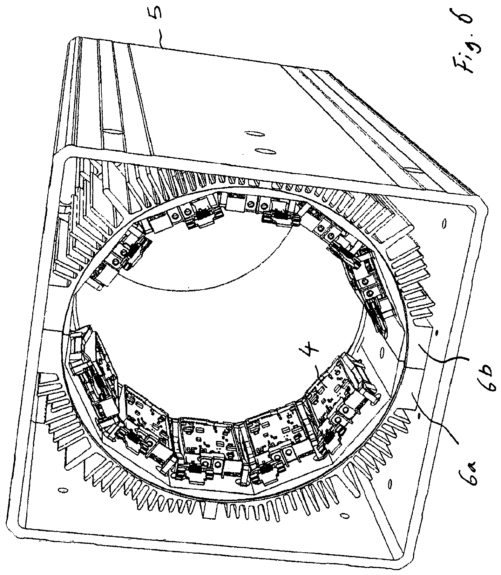

Der Kühlkörper 6 ist getrennt von dem Gehäuse 5 ausgebildet, wobei der Kühlkörper 6 in das Gehäuse 5 eingesetzt und mit diesem mechanisch verbunden, beispielsweise verschraubt, wird (siehe auch Fig. 6).

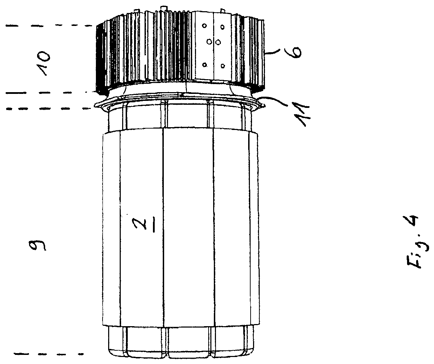

Fig. 4 zeigt eine axiale Anordnung von Stator 2, einem axial vermittelnden Zwischenstück 11 und dem Kühlkörper 6 innerhalb des Gehäuses 5, wobei das Gehäuse 5 zur Verdeutlichung ausgeblendet ist.

Der Stator 2 und der Rotor 3 sind in einem ersten axialen Abschnitt 9 des Gehäuses 5 angeordnet und der Kühlkörper 6 ist in einem zweiten, vom ersten axialen Abschnitt 9 verschiedenen axialen Abschnitt 10 innerhalb des Gehäuses 5 angeordnet. Das thermisch isolierende Zwischenstück 11 ist zwischen dem ersten axialen Abschnitt 9 und dem zweiten axialen Abschnitt 11 angeordnet und dient unter anderem zur axialen Kühlluftführung.

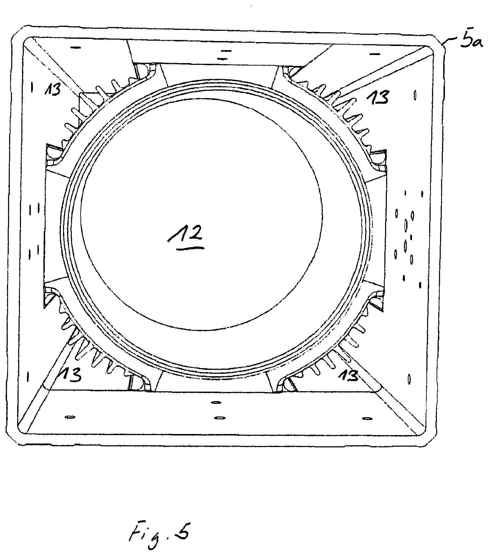

Bezugnehmend auf Fig. 5 weist das Gehäuse 5 einen ersten, axial verlaufenden, zentralen, kreiszylindrischen Kanal 12 auf, wobei an einer äußeren Oberfläche des ersten Kanals 12 axial verlaufende Kühlfinnen angeordnet sind. Der Stator 2 und der Rotor 3 sind innerhalb dieses ersten Kanals 12 angeordnet, wobei der Kanal 12 mit stirnseitigen Abschlusselementen verschlossen sein kann, so dass sich mit dem Kühlkörper eine (geschlossene) Kammer zur Aufnahme des Aktivteils aus Rotor und Stator bildet, wodurch eine hohe Schutzklasse (IP) erreicht werden kann.

Das Gehäuse 5 weist weiter vier axial verlaufende zweite Kanäle 13 auf, wobei die zweiten Kanäle 13 den ersten Kanal 12 radial bzw. außen umgeben und wobei die zweiten Kanäle 13 geschlossene Kanäle zur axialen Führung des Kühlmediums bilden. Die geschlossenen Kanäle 13 sind von der Umgebung durch eine Außenwand 5a des Gehäuses 5 getrennt. Der erste Kanal 12 und die zweiten Kanäle 13 erstrecken sich nur über den ersten axialen Abschnitt 9 des Gehäuses 5, so dass im zweiten axialen Abschnitt 10 lediglich die Außenwand 5a des Gehäuses 5 als Mantel vorhanden ist bzw. nach einer materialabtragenden Bearbeitung, beispielsweise Fräsen, "stehen bleibt".

In den zweiten axialen Abschnitt 10 des Gehäuses 5 wird der Kühlkörper 6 zusammen mit den mit dem Kühlkörper verbundenen Leistungsmodulen 4 als Inlay eingesetzt und anschließend mit dem Gehäuse 5 verschraubt. Der Kühlkörper 6 ist zwischen dem Aktivteil und dem B-Lagerschild in das Gehäuse 5 eingesetzt. Der Kühlkörper 6 kann in Richtung des A-Lagerschilds eine Dichtfläche und in Richtung des B-Lagerschilds einen Rezess zur Aufnahme des B-Lagerschildes aufweisen, so dass er auch mit diesem abdichtet.

Die durch Verrippung entstehende Kühlfläche für jedes Leistungsmodul ist in etwa gleich groß dimensioniert. Bei einer gleichmäßigen Anströmung wird sich somit der gleiche thermische Widerstand zwischen Leistungsmodul 4 und Kühlmedium für alle verbauten Leistungsmodule ergeben. Im Betrieb wird je Leistungsmodul die gleiche mittlere Temperatur erreicht. Zur Zwangsführung des Kühlmediums hin zu den oberflächenvergrößernden Strukturen, können Verdrängungskörper an geeigneten Stellen in die Kanäle 13 eingebracht werden.

Eine elektrische Kontaktierung der Leistungsmodule, beispielsweise mit der Steuereinheit, erfolgt durch Steckverbinder 16, die in korrespondierende, nicht dargestellte Buchsen eingreifen.

Die Kühlrippen 8 des Inlay-Kühlkörper 6 werden direkt vom Kühlmedium axial überströmt. Das Gehäuse 5 besteht beispielsweise aus einer Aluminiumlegierung. Der Kühlkörper 6 besteht aus einem thermisch gut leitfähigen Material, beispielsweise Kupfer.

Kontaktflächen des Kühlkörpers 6 mit dem Gehäuse 5 werden soweit wie möglich vermieden. Die mechanische Fixierung des Kühlkörpers 6 im Gehäuse 5 erfolgt an einer axial ausreichend weit vom Aktivteil (Stator und Rotor) der Maschine entfernten Stelle. Die Kontaktflächen können als Dichtflächen ausgeführt sein. Es kann ein Spalt zwischen Kühlkörper 6 und Gehäuse 5 vorhanden sein. Dieser Spalt kann mit Dichtmasse oder einer Dichtung verschlossen sein. Die Dichtmasse/Dichtung ist thermisch schlecht leitfähig. Dadurch wird eine weitere thermische Entkopplung des Kühlkörpers vom Aktivteil erreicht. Gleichzeitig werden mechanischen Spannungen (durch unterschiedliche Erwärmung von Kühlkörper und Gehäuse) in dem mit Dichtmasse gefüllten Spalt ausgeglichen.

Die Kühlrippen 8 und die Strömungsführung des Kühlmediums sind derart gestaltet, dass der thermische Widerstand zwischen dem jeweiligen Leistungsmodul 4 und dem Kühlmedium in etwa gleich ist. Das Kühlmedium überströmt bevorzugt zuerst die Kühlrippen 8 des Kühlkörpers 6 bevor es am Aktivteil der Maschinen vorbeigeführt wird, d.h. durch die Kanäle 13 strömt, und den Aktivteil entwärmt.

Der Kühlkörper 6 kann mit dem Innenraum abdichten, in welchem der Aktivteil und die Leistungselektronik angeordnet sind. Der Kühlkörper 6 selbst kann undurchlässig für Kühlmedien, beispielsweise Luft, sein.

Bei Gehäusen ohne geschlossene Kühlkanäle 13 können in das Gehäuse "Fenster" eingeschnitten sein. Durch diese Fenster werden die Kühlkörper beispielsweise durchgesteckt.

Dadurch führen sie die Wärme direkt an die Umgebungsluft ab. Hierbei dichtet der Kühlkörper mit Dichtungen von innen gegen das Gehäuse ab.

Das Gehäuse kann zweigeteilt ausgeführt sein. Beide Gehäuseteile können die gleichen äußeren Abmessungen aufweisen. In einem Gehäuseteil ist der Aktivteil der Maschine angeordnet und im anderen Gehäuseteil können die Leistungsmodule und die Steuereinheit angeordnet sein. Beide Gehäuseteile werden beispielweise zwischen den Lagerschildern montiert. Zur thermischen Entkopplung kann zwischen ihnen ein Zwischenstück vorgesehen sein, welches aus schlecht wärmeleitendem Kunststoff besteht.

Für den Fall, dass sich der zentrale Kanal 12 über die vollständige axiale Länge des Gehäuses 5 erstreckt, kann der Kühlkörper über ausgeschnittenen "Fenster" in der Außenwand des Kanals 12 vom Innenraum des Kanals 12 in die Kühlkanäle 13 gesteckt werden.

Das B-Lagerschild kann sehr weit nach vorne gezogen werden. Der Kühlkörper wird dann nicht durch das Gehäuse, sondern durch die Seitenwände des B-Lagerschildes gesteckt. Der Kühlkörper befindet sich dann axial gesehen hinter dem Rezess von B-Lagerschild und Gehäuse.

Es besteht weiter die Möglichkeit, den Kühlkörper nicht von innen nach außen, sondern umgekehrt, von außen nach innen, durch das Gehäuse zu stecken. Bei dieser Ausführungsform befinden sich die Dichtflächen zwischen Kühlkörper und Gehäuse nicht auf der Innenseite des Gehäuses, sondern auf der Außenseite ("umgekehrt gesteckte Ausführung").

Bei einem hochintegrierten Antrieb mit nur einem Leistungsmodul kann der gesamte Kühlkörper einstückig gebildet sein. Der Kühlkörper kann vorteilhaft fertig montiert (Leistungsmodul mit Gate Ansteuerung und Zwischenkreiskondensator) von außen in das Maschinengehäuse gesteckt werden. Die Kontaktierung zum Aktivteil erfolgt dabei "blind" durch Steckkontakte.

Das Kühlmedium kann Wasser, Luft, Öl oder ein sonstiger geeigneter Stoff sein.

## Patentansprüche

1. Motorsystem (1), aufweisend:
- einen Stator (2),
- einen Rotor (3),
- eine Anzahl von Leistungsmodulen (4), die jeweils ebene Kontaktflächen zur Wärmeableitung aufweisen,
- eine Steuereinrichtung, die dazu ausgebildet ist, die Leistungsmodule (4) anzusteuern,
- ein Gehäuse (5), wobei der Stator (2) und der Rotor (3) innerhalb des Gehäuses (5) angeordnet sind,
- mindestens einen Kühlkörper (6),
- wobei der Kühlkörper (6) eine Anzahl von ebenen Kontaktflächen (7) aufweist, die wärmeleitend mit jeweils korrespondierenden Kontaktflächen der Leistungsmodule (4) verbunden sind, und
- wobei der Kühlkörper (6) Bereiche (8) zur Wärmeableitung aufweist, wobei die Bereiche (8) zur Wärmeableitung von einem Kühlmedium umströmt sind,
- wobei der Stator (2) und der Rotor (3) in einem ersten axialen Abschnitt (9) des Gehäuses (5) angeordnet sind,
- wobei der Kühlkörper (6) in einem zweiten, vom ersten axialen Abschnitt (9) verschiedenen axialen Abschnitt (10) innerhalb des Gehäuses (5) eingesetzt ist,
- wobei das Gehäuse (5) aufweist:
- einen ersten, zentralen Kanal (12), wobei der Stator (2) und der Rotor (3) innerhalb des ersten Kanals (12) angeordnet sind, und
- eine Anzahl von zweiten Kanälen (13), wobei die zweiten Kanäle (13) den ersten Kanal (12) radial umgeben und wobei die zweiten Kanäle (13) geschlossene Kanäle zur Führung des Kühlmediums bilden,
- wobei sich der erste Kanal (12) und die zweiten Kanäle (13) nur über den ersten axialen Abschnitt (9) des Gehäuses (5) erstrecken,
**dadurch gekennzeichnet, dass**
- der Kühlkörper (6) zwischen einem aus dem Stator (2) und dem Rotor (3) bestehenden Aktivteil und einem B-Lagerschild in das Gehäuse (5) eingesetzt ist, und
- das Motorsystem (1) ein thermisch isolierendes Zwischenstück (11) aufweist, wobei das Zwischenstück (11) zwischen dem ersten axialen Abschnitt (9) und dem zweiten axialen Abschnitt (10) angeordnet ist.

2. Motorsystem (1) nach Anspruch 1, **dadurch gekennzeichnet, dass**
- der mindestens eine Kühlkörper (6) getrennt von dem Gehäuse (5) ausgebildet ist, wobei der Kühlkörper (6) mit dem Gehäuse (5) mechanisch gekoppelt ist.

3. Motorsystem (1) nach einem der vorhergehenden Ansprüche, **dadurch gekennzeichnet, dass**
- der Kühlkörper (6) ringförmig ausgebildet ist, wobei die Kontaktflächen (7) des Kühlkörpers (6) auf einer Innenseite des Rings angeordnet sind und die Bereiche zur Wärmeableitung (8) des Kühlkörpers (6) als oberflächenvergrößernd strukturierte Bereiche, insbesondere als Kühlfinnen, auf einer Außenseite des Rings angeordnet sind.

4. Motorsystem (1) nach einem der vorhergehenden Ansprüche, **dadurch gekennzeichnet, dass**
- der Kühlkörper (6) aus einer Anzahl von Ringsegmenten (6a, 6b) gebildet ist.

5. Motorsystem (1) nach einem der vorhergehenden Ansprüche, **dadurch gekennzeichnet, dass**
- das Gehäuse (5) durch Bearbeiten eines Strangpressprofils hergestellt ist

6. Motorsystem (1) nach einem der vorhergehenden Ansprüche, **dadurch gekennzeichnet, dass**
- eine Querschnittsfläche des Kühlkörpers (6) ein regelmäßiges Polygon darstellt.

## Claims

1. Motor system (1), having
- a stator (2),
- a rotor (3),
- a number of power modules (4) which each have planar contact faces for dissipating heat,
- a control device which is designed to actuate the power modules (4),
- a housing (5), wherein the stator (2) and the rotor (3) are arranged inside the housing (5), and
- at least one heat sink (6),
- wherein the heat sink (6) has a number of planar contact faces (7) which are connected in a thermally conductive fashion to respectively corresponding contact faces of the power modules (4), and
- wherein the heat sink (6) has regions (8) for dissipating heat, wherein a coolant flows around the regions (8) in order to dissipate heat,
- wherein the stator (2) and the rotor (3) are arranged in a first axial section (9) of the housing (5),
- wherein the heat sink (6) is inserted into a second axial section (10), different from the first axial section (9), inside the housing (5),
- wherein the housing (5) has:
- a first central duct (12), wherein the stator (2) and the rotor (3) are arranged inside the first duct (12), and
- a number of second ducts (13), wherein the second ducts (13) surround the first duct (12) radially, and wherein the second ducts (13) form closed ducts for conducting the coolant,
- wherein the first duct (12) and the second ducts (13) extend only over the first axial section (9) of the housing (5),
**characterized in that**
- the heat sink (6) is inserted into the housing (5) between an active part consisting of the stator (2) and the rotor (3) and a B end plate, and
- the motor system (1) has a thermally insulating intermediate element (11), wherein the intermediate element (11) is arranged between the first axial section (9) and the second axial section (10).

2. Motor system (1) according to Claim 1, **characterized in that**
- the at least one heat sink (6) is embodied separately from the housing (5), wherein the heat sink (6) is mechanically coupled to the housing (5).

3. Motor system (1) according to either of the preceding claims, **characterized in that**
- the heat sink (6) is embodied in an annular shape, wherein the contact faces (7) of the heat sink (6) are arranged on an inner side of the ring, and the regions for dissipating heat (8) of the heat sink (6) are arranged as regions, in particular as cooling fins, which are structured such as to enlarge the surface, on an outer side of the ring.

4. Motor system (1) according to one of the preceding claims, **characterized in that**
- the heat sink (6) is formed from a number of annular segments (6a, 6b).

5. Motor system (1) according to one of the preceding claims, **characterized in that**
- the housing (5) is manufactured by processing an extruded section.

6. Motor system (1) according to one of the preceding claims, **characterized in that**
- a cross-sectional area of the heat sink (6) constitutes a regular polygon.

## Revendications

1. Système de moteur (1), présentant :
- un stator (2),
- un rotor (3),
- un nombre de modules de puissance (4), présentant respectivement des surfaces de contact planes pour la dissipation de la chaleur,
- un dispositif de commande qui est configuré pour commander les modules de puissance (4),
- un boîtier (5), le stator (2) et le rotor (3) étant agencés à l'intérieur du boîtier (5),
- au moins un corps de refroidissement (6),
- le corps de refroidissement (6) présentant un nombre de surfaces de contact planes (7) qui sont reliées de manière thermiquement conductrice à des surfaces de contact correspondantes respectives des modules de puissance (4), et
- le corps de refroidissement (6) présentant des zones (8) pour la dissipation de la chaleur, les zones (8) pour la dissipation de la chaleur étant entourées par un milieu de refroidissement,
- le stator (2) et le rotor (3) étant agencés dans une première section axiale (9) du boîtier (5),
- le corps de refroidissement (6) étant inséré dans une deuxième section axiale (10) à l'intérieur du boîtier (5), différente de la première section axiale (9),
- le boîtier (5) présentant :
- un premier canal central (12), le stator (2) et le rotor (3) étant agencés à l'intérieur du premier canal (12), et
- un nombre de deuxièmes canaux (13), les deuxièmes canaux (13) entourant radialement le premier canal (12) et les deuxièmes canaux (13) formant des canaux fermés pour le guidage du milieu de refroidissement,
- le premier canal (12) et les deuxièmes canaux (13) s'étendant uniquement sur la première section axiale (9) du boîtier (5),
**caractérisé en ce que**
- le corps de refroidissement (6) est inséré dans le boîtier (5) entre une partie active constituée du stator (2) et du rotor (3) et un flasque B, et
- le système de moteur (1) présente une pièce intermédiaire thermiquement isolante (11), la pièce intermédiaire (11) étant agencée entre la première section axiale (9) et la deuxième section axiale (10).

2. Système de moteur (1) selon la revendication 1, **caractérisé en ce que**
- l'au moins un corps de refroidissement (6) est réalisé séparément du boîtier (5), le corps de refroidissement (6) étant couplé mécaniquement au boîtier (5).

3. Système de moteur (1) selon l'une quelconque des revendications précédentes, **caractérisé en ce que**
- le corps de refroidissement (6) est réalisé sous forme annulaire, les surfaces de contact (7) du corps de refroidissement (6) étant agencées sur un côté intérieur de l'anneau et les zones pour la dissipation de la chaleur (8) du corps de refroidissement (6) étant agencées sur un côté extérieur de l'anneau en tant que zones structurées augmentant la surface, notamment en tant qu'ailettes de refroidissement.

4. Système de moteur (1) selon l'une quelconque des revendications précédentes, **caractérisé en ce que**
- le corps de refroidissement (6) est formé d'un nombre de segments annulaires (6a, 6b).

5. Système de moteur (1) selon l'une quelconque des revendications précédentes, **caractérisé en ce que**
- le boîtier (5) est fabriqué par usinage d'un profilé extrudé.

6. Système de moteur (1) selon l'une quelconque des revendications précédentes, **caractérisé en ce que**
- une surface de section transversale du corps de refroidissement (6) représente un polygone régulier.
